Europäisches Patentamt

European Patent Office

Office européen des brevets

(19)

(11) **EP 1 323 779 A1**

(12) # EUROPEAN PATENT APPLICATION

(43) Date of publication:
**02.07.2003 Bulletin 2003/27**

(51) Int Cl.$^7$: **C08L 23/10**, C08L 23/12,
C08L 51/06, C08J 9/00

(21) Application number: **01130757.6**

(22) Date of filing: **21.12.2001**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **Borealis GmbH
2323 Schwechat-Mannswörth (AT)**

(72) Inventors:
- **Rohne, Gunhild
  2819 Gjovik (NO)**
- **Hesse, Achim Dr.
  01067 Dresden (DE)**

(74) Representative: **VA TECH Patente GmbH & Co
Stahlstrasse 21a
4031 Linz (AT)**

(54) **Foamed polyolefin sheets with improved property spectrum**

(57)     Foamed polyolefin sheets with an improved property spectrum having a density of 50 to 750 kg/m$^3$ consist of a mixture of modified propylene polymers having strain hardening behavior, silane crosslinked polymers, unmodified olefin polymers and usual auxiliary materials.

The foamed polyolefin sheets are suitable for the use in the packaging sector and in the motor vehicle sector.

**EP 1 323 779 A1**

Printed by Jouve, 75001 PARIS (FR)

**Description**

The invention relates to the use of a polyolefin mixture for the production of foamed polyolefin sheets with improved property spectrum consisting of a mixture of propylene polymers and modified olefin polymers.

Foamed polyolefin sheets from propylene polymers modified by high energy electron radiation are known (EP 0 190 889 A2). These foams have only restricted impact properties.

Silane crosslinkable propylene polymers (EP 0 821 018 A2, DE 196 37 602 A1) or heterophasic propylene polymers (DE 198 31 278 A1) and their application for foams are also known. The disadvantages of silane modified propylene polymers and the silane cross-linked polypropylene foam are the problematic processibility of propylene polymers into foams and the restricted impact properties of polypropylene foams.

Further known are silane crosslinkable ethylene polymers (US 3,646,155; EP 0 821 018 A2) and their application for foams. The disadvantages of silane crosslinked polyethylene foams are the low temperature resistance and stiffness of the foams.

It is the object of the present invention to provide foamed polyolefin sheets with improved property spectrum, whereby impact properties and stiffness can be varied within a broad range and the starting products for the foams have a good processibility.

According to the present invention, this object is achieved by using a polyolefin mixture comprising
10 to 95 wt% of propylene polymers **A** and
90 to 5 wt% of olefin polymers **B** where

- the propylene polymers **A** comprise modified propylene polymers with melt indices of 0.05 to 10 g/10 min at 230 °C/2.16 kg, which modified propylene polymers have strain hardening behavior, whereby the modified propylene polymers are present in the propylene polymers **A** up to 100 wt%, preferably from 20 to 100 wt% and most preferably from 50 to 100 wt% in admixture with unmodified propylene polymers with melt indices of 0.1 to 20 g/10 min at 230 °C/2.16 kg, and
- the olefin polymers **B** comprise silane precrosslinked and/or crosslinkable polymers which are selected from any one or mixtures of

    a) polymers which are grafted with ethylenically unsaturated hydrolyzable silane monomers, which polymers are selected from any one or mixtures of

        a1) ethylene homopolymers,
        copolymers of ethylene and $\alpha$-olefins with 3 to 18 carbon atoms,
        copolymers of ethylene and vinyl acetate, $C_1$-$C_{16}$ acrylic acid esters, $C_1$-$C_{16}$ methacrylic acid esters, acrylic acid and/or methacrylic acid,
        a2) propylene homopolymers,
        copolymers of propylene and ethylene or $\alpha$-olefins with 4 to 18 carbon atoms,
        heterophasic propylene polymers and
        elastomeric propylene polymers

    and
    b) polymers which are selected from any one or mixtures of - optionally elastomeric - copolymers of ethylenically unsaturated hydrolyzable silane monomers and

        b1) ethylene,
        ethylene and vinyl acetate, $C_1$-$C_{16}$ acrylic acid esters, $C_1$-$C_{16}$ methacrylic acid esters, acrylic acid or methacrylic acid,
        b2) propylene,
        propylene and vinyl acetate, $C_1$-$C_{16}$ acrylic acid esters, $C_1$-$C_{16}$ methacrylic acid esters, acrylic acid or methacrylic acid,

where the olefin polymers **B** comprise 0.1 to 10 wt% of chemically bound silane monomers and where the olefin polymers **B** have a gel content of 10 to 80 wt%, preferably of 35 to 70 wt% and where
the silane precrosslinked and/or crosslinkable polymers are present in the olefin polymers **B** up to 100 wt% and preferably from 50 to 100 wt% in admixture with unmodified ethylene polymers and/or ethylene-$C_3$-$C_8$-$\alpha$-olefin copolymers with melt indices of 0.1 to 20 g/10 min at 190 °C/2.16 kg, and/or unmodified propylene homopolymers and/or copolymers of propylene and ethylene or $\alpha$-olefins with 4 to 18 carbon atoms, heterophasic propylene polymers and/or elastomeric propylene polymers with melt indices of 0.1 to 20 g/10 min at 230 °C/2.16 kg

for the production of partly crosslinked foamed polyolefin sheets which have a combination of the following properties:

> a gel content from 5 to 60 wt%, preferably from 10 to 40 wt%
> a density from 50 to 750 kg/m$^3$, preferably from 400 to 600 kg/m$^3$
> a tensile modulus from 50 to 1100 MPa, preferably from 300 to 700 MPa
> and an Impact total penetration energy from 0.05 to 1.5 J/mm, preferably from 0.3 to 0.9 J/mm.

Optionally, the foamed polyolefin sheets according to the invention may contain usual auxiliary materials, e. g. from 0.01 to 40 wt% based on the polyolefin mixture **A** + **B**. The auxiliary materials may be selected from any one or mixtures of 0.01 to 1.5 wt% of stabilizers, 0.01 to 1 wt% of processing aids, 0.1 to 1 wt% of antistatic agents, 0.2 to 3 wt% of pigments, 0.01 to 1 wt% of α-nucleating agents, 1 to 30 wt% of inorganic and/or organic fillers and/or reinforcing materials, in each case based on the polyolefin mixture **A** + **B**.

Stabilizers may be selected from any one or mixtures of e.g. 0.01 % to 0.6 wt% of phenolic antioxidants, 0.01 % to 0.6 wt% of 3-arylbenzofuranones, 0.01 % to 0.6 wt% of processing stabilizers based on phosphites, 0.01 % to 0.6 wt% of high temperature stabilizers based on disulfides and thioethers and 0.01 % to 0.8 wt% of sterically hindered amines (HALS).

Suitable phenolic antioxidants are 2-t-butyl-4,6-dimethylphenol, 2,6-di-t-butyl-4-methylphenol, 2,6-di-t-butyl-4-isoamylphenol, 2,6-di-t-butyl-4-ethylphenol, 2-t-butyl-4,6-diisopropylphenol, 2,6-dicyclopentyl-4-methylphenol, 2,6-di-t-butyl-4-methoxymethylphenol, 2-t-butyl-4,6-dioctadecylphenol, 2,5-di-t-butylhydroquinone, 2,6-di-t-butyl-4,4-hexadecyloxyphenol, 2,2'-methylene-bis(6-t-butyl-4-methylphenol), 4,4'-thio-bis-(6-t-butyl-2-methylphenol), octadecyl-3-(3,5-di-t-butyl-4-hydroxyphenyl)-propionate, 1,3,5-trimethyl-2,4,6-tris-(3',5'-di-t-butyl-4-hydroxybenzyl)-benzene and/or pentaerythritol-tetrakis-3-(3,5-di-t-butyl-4-hydroxyphenyl)-propionate.

As benzofuranone derivative, 5,7-di-t-butyl-3-(3,4-dimethylphenyl)-3H-benzofuran-2-one, in particular, is suitable.

As HALS compounds, bis-2,2,6,6-tetramethyl-4-piperidyl sebacate and/or poly-1,1,3,3-tetra-methylbutyl)-imino)-1,3,5-triazine-2,4-diyl)(2,2,6,6-tetramethylpiperidyl)-amino)-hexamethy-lene-4-(2,2,6,6-tetramethyl)piperidyl)-imino) are particularly suitable.

The α-nucleating agents, optionally contained in the inventive foamed polyolefin sheets, preferably are talc, sorbitol and sorbitol derivatives, sodium benzoate or the sodium salt of methylene-bis-(2,4-di-t-butylphenol) phosphoric acid.

As processing aids, the inventive foamed polyolefin sheets may contain calcium stearate, magnesium stearate and/or waxes.

Examples of inorganic fillers and/or reinforcing materials, optionally contained in the inventive foamed polyolefin sheets, are silica, particularly in the form of glass or quartz; silicates, particularly talc; titanates, titanium dioxide, aluminum oxide, kaolin, magnesium oxide, magnesite, iron oxides, silicon carbide, silicon nitride, barium sulfate, calcium carbonates and/or mica.

Examples of organic fillers and/or reinforcing materials, optionally contained in the inventive foamed polyolefin sheets, are mechanical wood pulp, fibers or particles of cellulose, starch, poly(methyl methacrylate), polyvinyl alcohol, polytetrafluoroethylene, polyamide, poly-ethylene terephthalate or duroplastic synthetic materials.

**Modified propylene polymers** can be produced by any number of processes, e.g. by treatment of the unmodified propylene polymer with thermally decomposing radical-forming agents and/or by treatment with ionizing radiation, where both treatments may optionally be accompanied or followed by a treatment with bi- or multifunctionally unsaturated monomers, e.g. butadiene, isoprene, dimethylbutadiene or divinylbenzene. Further processes may be suitable for the production of the modified propylene polymer, provided that the resulting modified propylene polymer meets the characteristics of **strain hardening behavior**, which is defined below.

Examples of said modified propylene polymers **A** are, in particular:

- polypropylenes modified by the reaction of polypropylenes with bismaleimido compounds in the melt (EP 0 574 801 A1; EP 0 574 804 A2),
- polypropylenes modified by the treatment of polypropylenes with ionizing radiation in the solid phase (EP 0 190 889 A2; EP 0 634 454 A1),
- polypropylenes modified by the treatment of polypropylenes with peroxides in the solid phase (EP 0 384 431 A2) or in the melt (EP 0 142 724 A2),
- polypropylenes modified by the treatment of polypropylenes with multifunctional, ethy-lenically unsaturated monomers under the action of ionizing radiation (EP 0 678 527 A2),
- polypropylenes modified by the treatment of polypropylenes with multifunctional, ethylenically unsaturated monomers in the presence of peroxides in the melt (EP 0 688 817 A1; EP 0 450 342 A2)

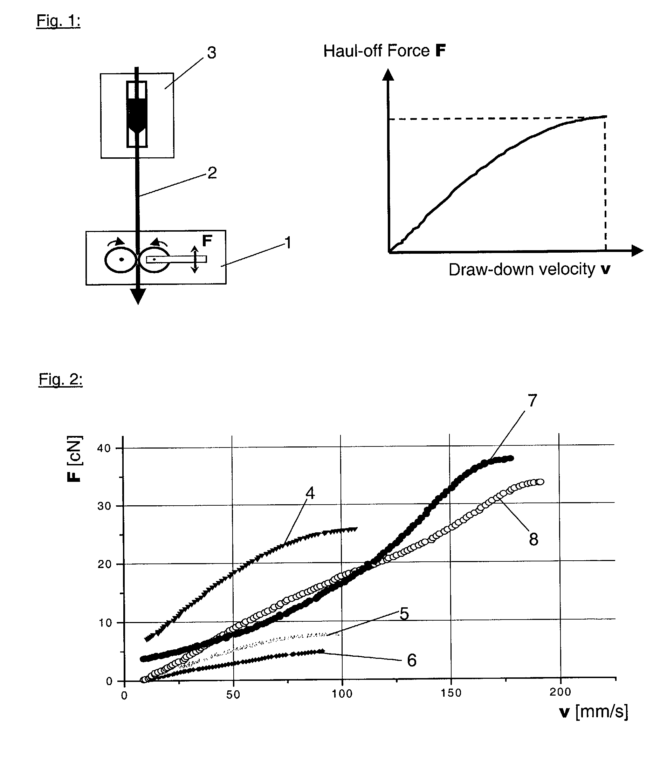

**Strain hardening behavior** as used herein is defined according to Fig. 1 and 2.

Fig. 1 shows a schematic representation of the experimental procedure which is used to determine strain hardening. The strain hardening behavior of polymers is analysed by Rheotens apparatus **1** (product of Göttfert, Siemensstr.2, 74711 Buchen, Germany) in which a melt strand **2** is elongated by drawing down with a defined acceleration. The haul-off force F in dependence of draw-down velocity v is recorded.

The test procedure is performed in a standard climatized room with controlled room temperature of T = 23 °C. The Rheotens apparatus **1** is combined with an extruder/melt pump **3** for continuous feeding of the melt strand **2**. The extrusion temperature is 200 °C; a capillary die with a diameter of 2 mm and a length of 6 mm is used and the acceleration of the melt strand **2** drawn down is 120 mm/s$^2$.

The schematic diagram in Figure 1 shows in an exemplary fashion the measured increase in haul-off force F (i.e. "melt strength") vs. the increase in draw-down velocity v (i.e. "drawability").

Figure 2 shows the recorded curves of Rheotens measurements of polymer samples with and without strain hardening behavior. The maximum points (Fmax; vmax) at failure of the strand are characteristic for the strength and the drawability of the melt.

The standard propylene polymers **4,5,6** with melt indices of 0.3, 2.0 and 3.0 g/10 min at 230 °C/2.16 kg show a very low melt strength and low drawability. They have no strain hardening and thus a poor processibility into extrusion foams. Modified propylene polymers **7** (melt index of sample in diagram is 2 to 3 g/10 min at 230 °C/2.16 kg) or LDPE **8** (melt index of sample in diagram is 0.7 g/10 min at 230 °C/2.16 kg) show a completely different melt strength vs. drawability behavior. With increasing the draw down velocity v the haul-off force F increases to a much higher level, compared to the standard propylene polymers **4,5,6**. This curve shape is characteristic for strain hardening.

"Modified propylen polymers which have strain hardening behavior" as used herein have enhanced strength with haul-off forces $F_{max}$ > 15 cN and enhanced drawability with draw-down velocities $V_{max}$ > 150 mm/s.

**Unmodified propylene polymer** as used herein comprises propylene homopolymers, copolymers of propylene and ethylene and/or α-olefins with 4 to 18 carbon atoms and mixtures of the aforementioned polymers.

The term **copolymer** as used above particularly refers to random propylene copolymers, propylene block copolymers, random propylene block copolymers and elastomeric polypropylenes, but is not restricted to these types of copolymers.

The modified propylene polymers are preferably prepared by

a) mixing a particulate unmodified propylene polymer, which comprises

a1) propylene homopolymers, especially propylene homopolymers with a weight average molecular weight $M_w$ of 500,000 to 1,500,000 g/mol, and/or

a2) copolymers of propylene and ethylene and/or α-olefins with 4 to 18 carbon atoms, or of mixtures of such copolymers,

with from 0.05 to 3 wt%, based on the polyolefin composition used, of acyl peroxides, alkyl peroxides, hydroperoxides, peresters and/or peroxycarbonates as free-radical generators capable of thermal decomposition, if desired diluted with inert solvents, with heating to 30-100 °C, preferably to 60-90 °C,

b) sorption of bifunctional unsaturated monomers by the particulate propylene polymer at a temperature T(°C) of from 20 to 120 °C, preferably of from 60 to 100 °C, where the amount of the absorbed bifunctional unsaturated monomers is from 0.01 to 10 wt%, preferably from 0.05 to 2 wt%, based on the propylene polymer used, and then

c) heating and melting the particulate polyolefin composition in an atmosphere comprising inert gas and/or the volatile bifunctional monomers, from sorption temperature to 210 °C, whereupon the free-radical generators capable of thermal decomposition are decomposed and then

d) heating the melt up to 280 °C in order to remove unreacted monomers and decomposition products,

e) agglomerating the melt in a manner known per se.

Usual amounts of auxiliary substances, which may range from 0.01 to 1.5 wt% of stabilizers, 0.01 to 1 wt% of processing aids, 0.1 to 1 wt% of antistatic agents, 0.2 to 3 wt% of pigments and up to 3 wt% of α-nucleating agents, in each case based on the sum of the propylene polymers, may be added before step a) and/or e) of the method and/or before or during step c) and/or d) of the above described method.

The particulate unmodified propylene polymer may have the shape of powders, granules or grit with grain sizes ranging from 0.001 mm up to 7 mm.

The process for producing the modified propylene polymer preferably is a continuous method, performed in continuous reactors, mixers, kneaders and extruders. Batchwise production of the modified propylene polymer, however is feasible as well.

Preferably volatile bifunctional monomers are absorbed by the particulate propylene polymer from the gas phase.

Practical sorption times $\tau$ of the volatile bifunctional monomers range from 10 to 1000 s,

where sorption times $\tau$ of 60 to 600 s are preferred.

The bifunctional unsaturated monomers, which are used in the process for producing the modified propylene polymers preferably are $C_4$ to $C_{10}$ dienes and/or $C_7$ to $C_{10}$ divinyl compounds. Especially preferred are butadiene, isoprene, dimethyl-butadiene or divinylbenzene.

According to a further embodiment of the present invention and in addition to what is defined above, the unmodified propylene polymers are selected from any one or mixtures of

a) conventional polypropylene polymers, preferably propylene homopolymers and/or copolymers of propylene, ethylene and/or $\alpha$-olefins with 4 to 18 carbon atoms, obtainable by using Ziegler-Natta catalysts or metallocene catalysts, having a propylene content of 80.0 to 99.9 wt%, in the form of random copolymers, block copolymers and/or random block copolymers with melt indices of 0.1 to 40 g/10 min at 230 °C/2.16 kg and preferably 1 to 8 g/10 min at 230 °C/2.16 kg,

b) a polyolefin mixture with an Mw/Mn ratio of 2 to 6 and a melt index of 1 to 40 g/10 min at 230 °C/2.16 kg, which comprises

b1) 60 to 98 wt% of a crystalline copolymer of 85 to 99.5 wt% of propylene and 15 to 0.5 wt% of ethylene and/or an $\alpha$-olefin of the general formula $CH_2$=CHR, in which R is a linear or branched alkyl group with 2 to 8 carbon atoms, and

b2) 2 to 40 wt% of an elastic copolymer of 20 to 70 wt% of ethylene and 80 to 30 wt% of propylene and/or an $\alpha$-olefin of the general formula $CH_2$=CHR, in which R is a linear or branched alkyl group with 2 to 8 carbon atoms, and

c) essentially amorphous, non isotactic polymers of propylene with a melt index of 0.1 to 100 g/10 min at 230 °C/2.16 kg, the essentially amorphous polymers of propylene comprising homopolymers of propylene and/or copolymers of propylene comprising at least 85 wt% of propylene and not more than 15 wt% percent of one or more $\alpha$-olefins of the general formula $CH_2$=CHR, in which R is a linear or branched alkyl group with 2 to 8 carbon atoms.

The polyolefin mixtures b) of crystalline copolymers and elastic copolymers, optionally as starting materials for the modified propylene polymers **A** as well as the unmodified propylene polymers of propylene polymers **A,** are polymer mixtures described, for example, in EP 0 400 333 A2 or EP 0 472 946 A2.

The largely amorphous polypropylenes or propylene copolymers c), optionally as starting materials for the modified propylene polymers **A** as well as the unmodified propylene polymers of propylene polymers **A** are, in particular, stereo block polypropylenes, which are prepared, for example, by using highly active Ziegler-Natta catalysts fixed on a metal oxide (Collette, J., Macromolecules 22 (1989), 3851 - 3858; DE 28 30 160 A1) or soluble Ziegler-Natta catalysts (de Candia, F., Makromol. Chem. 189 (1988), 815 - 821), optionally with subsequent reactive modification and/or degradation.

Further examples of non isotactic propylene homopolymers c), optionally contained as starting materials for the modified propylene polymers **A** as well as the unmodified propylene polymers of propylene polymers **A** are products as described in EP 0 475 307 A1.

Unmodified propylene polymers are preferably obtained by polymerization with a Ziegler-Natta catalyst system comprising titanium-containing solid components, an organo-aluminum compound as cocatalyst and an external donor having the general formula

$$R_x R'_y Si(R''O)_{4-x-y}$$

wherein R, R' and R" are identical or different and are linear or branched or cyclic aliphatic or aromatic hydrocarbon residues, and y and x independently from each other are 0 or 1, provided that x + y are 1 or 2. R, R' and R" may range from 1 to 20 carbon atoms, where dicyclopentyldimethoxysilane is preferred as external donor.

Examples of unmodified propylene polymers obtained by polymerization with a Ziegler-Natta catalyst system as described above are propylene polymers as described in EP 0 790 262 A1; WO 99/24478 and WO 99/16797. Preferred are unmodified propylene polymers with a stereospecifity index ranging from 97 to 99 %, whereby the stereospecifity index is measured by Infrared-spectroscopy and calculated as described in EP 0 277 514 A2 on page 3.

According to a preferred embodiment the silane monomers of the olefin polymers **B** have the general formula $XY_{3-n}SiR_n$, in which X is an ethylenically unsaturated group which can be grafted or copolymerized, preferably vinyl, allyl, acryloxypropyl or methacryloxypropyl, Y is an alkyl or aryl group, preferably methyl or phenyl, and R is a $C_1$-$C_8$ alkoxy, and/or carboxy group and/or halogen, preferably methoxy, ethoxy, acetoxy, chlorine, bromine or iodine, and n represents the numbers 1, 2 or 3.

The silane monomers are selected from any one or mixtures of:

- acryloxyalkylsilanes, such as acryloxypropyltrimethoxysilane, acryloxypropyldimethyl-ethoxysilane, acryloxypropylmethyldiethoxysilane, acryloxypropyltriethoxysilane, acryloxypropyltrismethoxyethoxysilane, trimethylsiloxyethyl acrylate, acryloxypropyl-dimethylchlorosilane and acryloxypropyltrichlorosilane,
- alkenylalkoxysilanes, such as allyltriethoxysilane, allyltrimethoxysilane, octenyltrimethoxysilane, propenyltriethoxysilane and/or propenyltrimethoxysilane,
- alkenylhalogensilanes such as allyldimethyldichlorosilane, allyldimethylchlorosilane, hexenyldimethylchlorosilane, methylcyclohexenylethyldichlorosilane, allyltrichlorosilane, hexenyltrichlorosilane, octenyltrichlorosilane, propenyltrichlorosilane and tetradecenyltrichlorosilane,
- aminoalkenylsilanes such as aminobutenyltriethoxysilane and aminoethylallyldimethoxysilane,
- aminovinylsilanes such as aminoethyldiethoxyvinylsilane, aminoethyldimethoxyvinylsilane and aminophenylvinyltrimethoxysilane,
- cycloalkenylsilanes such as cyclohexenyltriethoxysilane, triethoxysilylbicycloheptene, cyclohexenylethyltrimethoxysilane, cyclohexenylethyldimethylchlorosilane, trichlorosilyl-ethylcyclohexene and cyclohexenyltrichlorosilane,
- methacryloxyalkylsilanes such as methacryloxypropyltrimethoxysilane, methacryloxy-propyldimethylethoxysilane, methacryloxypropylmethyldiethoxysilane, methacryloxy-propyltriethoxysilane, methacryloxypropyltrismethoxyethoxysilane, trimethylsiloxyethyl-methacrylate, methacryloxypropyldimethylchlorosilane and methacryloxypropyltri-chlorosilane,
- vinylalkoxysilanes such as vinyltributoxysilane, vinyltriethoxysilane, vinyltriisopropoxy-silane, vinyltrimethoxysilane, vinyltrismethoxyethoxysilane, vinyltristrimethoxysilane, vi-nyldimethylethoxysilane, vinyldimethylmethoxysilane, vinylethyldiethoxysilane, vinyl-methyldiethoxysilane, phenylvinyltrimethoxysilane, diphenylvinylethoxysilane, vinylphenyldiethoxysilane, vinylphenyldimethoxysilane and vinylphenylmethylmethoxysilane,
- vinylhalogensilanes such as vinylethyldichlorosilane, vinylmethyldichlorosilane, diphenylvinylchlorosilane, phenylvinyldichlorosilane, vinyldimethylchlorosilane and vinyltrichlorosilane,
- vinylcarboxysilanes such as vinylmethyldiacetoxysilane and/or vinyltriacetoxysilane.

The silane precrosslinked and/or crosslinkable olefin polymer is preferably a crosslinked ethylene-methylmethacrylate-vinyltrimethoxysilane terpolymer having a content of methylmethacrylate of from 25 to 35 wt% and a content of vinyltrimethoxysilane of from 0.1 to 2 wt%.

According to a further embodiment of the invention the foamed polyolefin sheets are obtained by adding 0.01 to 1 wt%, based on the polyolefin mixture, of silanole condensation catalysts and 0.5 to 12 wt%, based on the polyolefin mixture, of blowing agents to the polyolefin mixture,

melting the polyolefin mixture,

extruding the polyolefin mixture into a zone of reduced pressure and

conditioning the polyolefin sheets in a moist atmosphere under crosslinking, whereby the olefin polymers **B** comprise silane crosslinkable polymers.

The blowing agents, used in the process for producing extrusion foamed polyolefin sheets, are chemical blowing agents that split off gas, or hydrocarbons, halogenated hydrocarbons and/or gases. Examples of suitable chemical blowing agents, that emit a gas, are sodium hydrogencarbonate, azodicarbonamide and/or cyanuric trihydrazide. Suitable hydrocarbons as blowing agents are readily volatile hydrocarbons, such as pentane, isopentane, propane and/or isobutane. Examples of suitable halogenated hydrocarbons are monofluorotrichlo-romethane and/or difluoromonochloromethane. Suitable gases as blowing agents are nitro-gen, argon and/or carbon dioxide.

Examples of suitable silanole condensation catalysts are dibutyl tin dilaurate or dibutyl tin diacetate. Low molecular carbocylic acids or polymer bound carboxylic acids, e.g. stearic acid or ethylene acrylic acid copylemers, are also suitable.

In the inventive process for producing extrusion foamed polyolefin sheets, the continuous kneaders for producing the foamed polyolefin sheets from the polyolefin mixture containing blowing agents and silanole condensation catalysts can be single screw extruders with an L/D of 20 to 40 or synchronous twin screw extruders or extruder cascades of homogenizing extruders (single screw or twin screw) and foaming extruders. Optionally, a melt pump and/or a static mixer can be used additionally between the extruder and the die head. Advantageous die temperatures for discharging the melt, which contains the blowing agent and the silanole condensation catalyst, are 190 to 240 °C.

According to a still further embodiment of the present invention the foamed polyolefin sheets are obtained by adding 0.01 to 1 wt%, based on the polyolefin mixture, of silanole condensation catalysts and 0.5 to 12 wt%, based on the polyolefin mixture, of blowing agents to the polyolefin mixture,

melting the polyolefin mixture,

extruding the polyolefin mixture into a zone of reduced pressure and

conditioning the polyolefin sheets in a moist atmosphere under crosslinking, whereby the olefin polymers **B** comprise silane precrosslinked polymers which have a gel content of 0.1 to 5 wt%.

The precrosslinked polymers are produced e.g. by melt extrusion of the polymers which are grafted/copolymerized with silane monomers together with 0.005 to 0.05 wt%, based on the polyolefin mixture, of silanole condensation catalysts. The precrosslinked polymers may also be produced by storage of the catalyst-containing material in moist atmosphere.

According to a feature of the present invention the foamed polyolefin sheets are used in the packaging sector, particularly of packaging, which can be used as reusable and transporting packagings, packaging corners and equipment hoods.

A further object of the present invention is the use of the foamed polyolefin sheets in the motor vehicle sector, particularly for interior parts of motor vehicles, such as instrument panels, sunshades, arm rests, air ducts and door linings.

**Examples**

**Characterisation of the foamed sheets**

1. **Determination of the foam density**

The foam density is determined by a gravimetric method according to the formula:

$$\rho_f = \rho_{water} \times m_{f,air} / m_{f,water}$$

| | |
|---|---|
| $\rho_f$ | density of the foam |
| $\rho_{water}$ | density of water (= 1 g/cm$^3$) |
| $m_{f,air}$ | weight of the test piece measured in air |
| $m_{f,water}$ | weight of water displaced by immersed test piece |

This method is suitable for samples with undefined geometry.

The following tests of the foamed specimens were made after 7 days conditioning time :

2. **Tensile modulus** was determined according to DIN 53504. The tensile test was carried out with the test specimen S2 at a temperature of 23 °C. The tensile testing rate was 1 mm/s during the modulus measurement and afterwards it was increased up to 50 mm/s.

3. **Impact total penetration energy** was determined at 23 °C according to DIN 53443 / Part 2 with a drop height of 100 cm and the falling weight of 32 kg.

4. **Gel content** was determined by extraction in boiling xylene of a foam sample during a period of 24 h. The insoluble content was dried in vacuum at 80 °C during a period of 16 h.

gel content = weight of insoluble material x 100 / weight of foam sample

**Example 1**

1.1 Synthesis of the Modified Propylene Polymer **A**

A powdery polypropylene homopolymer, with a melt index of 0.25 g/10 min at 230 °C/2.16 kg and an average particle size of 0.45 mm, is metered continuously into a continuous mixer. Furthermore, 0.45 wt% based on the propylene homopolymer of tert butyl peroxybenzoate as thermally decomposing free radical forming agent is metered into the mixer. While being mixed homogeneously at 50 °C, the propylene homopolymer containing the tert butyl peroxybenzoate is charged absorptively during a residence time of 7 minutes at 50 °C by means of a mixture of butadiene and nitrogen with 0.135 wt% of butadiene, based on the polypropylene homopolymer. After transfer to a twin screw extruder, the powdery reaction mixture, in contact with the mixture of butadiene and nitrogen, with which it has been charged, is melted at a mass temperature of 230 °C and, after a coarse degassing, subjected to a fine degassing with addition of water as an entraining agent, an additive mixture of 0.1 wt% of tetrakis-(methylene-(3,5-di-t-butylhydroxycinnamate)-methane, 0.1 wt% of tris-(2,4-di-t-butylphenyl)-phosphite), 0.1 wt% of pentaerythritol tetrakis-3-(3,5-di-t-butyl-4-hydroxyphenyl)-propionate and 0.1 wt% of calcium stearate is added to the melt. After distribution of additives the melt is discharged and granulated.

The resulting, modified propylene polymer **A** shows strain hardening behavior characterized by the Rheotens values of $F_{max}$ = 30.5 cN and $v_{max}$ = 210 mm/s measured at failure of the strand and a melt index of 2.3 g/10 min at 230 °C/2.16 kg.

1.2 Preparation of the Polyolefin Mixture

A mixture of
75 wt% of the modified propylene polymer **A** having strain hardening behavior characterized by the Rheotens values of $F_{max}$ = 30,5 cN and $v_{max}$ = 210 mm/s measured at failure of the strand and a melt index of 2.3 g/10 min at 230 °C/2.16 kg,
23 wt% of an ethylene-methylmethacrylate-vinyltrimethoxysilane terpolymer **B** having a content of methylmethacrylate of 31 wt%, a content of vinyltrimethoxysilane of 1.0 wt% and contains 0.1 wt% of calcium stearate, 0.1 by weight of tetrakis-(methylene-3,5-di-t-butyl-hydroxyhydrocinnamate)-methane and 0.1 wt% of tris-(2,4-di-t-butylphenyl)-phosphite as auxiliary materials and has a melt index of 10 g/10 min at 190 °C/2.16 kg, and
2 wt% of a master batch containing 4 wt% of dibutyl tin dilaurate as silanole condensation catalyst,
are melted in a PRISM TSE24HC twin screw extruder, L/D=30 with a temperature profile of 100/145/185/210/220/200/190/185 °C, homogenized, discharged and granulated.

1.3 Manufacture of the foamed polyolefin sheet

A dry blend mixture of the stabilized polyolefin compound of the modified propylene polymer **A**, the ethylene-methylmethacrylate-vinyltrimethoxysilane terpolymer **B** as described in 1.2 and 0.75 wt%, based on the polyolefin mixture, of a blowing agent based on bicarbonate and citric acid, is supplied by means of a metering system to the feeding funnel of a single screw extruder PM 30 L/D = 28 at 50 rpm having a screw with increasing diameter used for slow compression build-up without mixing elements, a flat die (coathanger die), a chill roll (80°C) take off and a temperature profile of 200/220/240/240/220/170/170 °C. Initially, the mixture is melted and homogenized, subsequently the split off blowing gas is distributed homogeneously and the melt is foamed after leaving the flat die.

After a conditioning time of 7 days the following properties of the foamed polyolefin sheet were measured:

| | |
|---|---|
| Density | 0.51 g/cm$^3$ |
| Tensile modulus | 572 MPa |
| Penetration energy at 23 °C | 0.49 J/mm |
| Gel content | 18.2 wt% |

**Example 2**

2.1 Synthesis of the Modified Propylene Polymer **A**

A powdery random polypropylene copolymer, with an ethylene content of 4 wt%, a melt index of 0.3 g/10 min at 230 °C/2.16 kg and an average particle size of 0.85 mm, is continuously added into a heatable mixer of the experimental modification equipment. Furthermore, over a flanged-on auxiliary material metering device, 0.05 wt% of hydrotalcit, 0.05 wt% of calcium stearate and 0.075 wt% of di-tert-butyl peroxide, in each cased based on the propylene copolymer, are added continuously into the mixer. During the process of mixing homogeneously at 70 °C, the polypropylene copolymer, charged with the thermally decomposing free radical-forming agent and auxiliary material, is charged absorptively during a residence time of 10 minutes at 70 °C by a mixture of divinylbenzene and nitrogen, flowing in from the extruder over the connecting piece, with 0.32 wt% of divinylbenzene, based on the polypropylene copolymer.

After transfer to the twin-screw extruder, the powdery reaction mixture, in contact with the mixture of divinylbenzene and nitrogen, is melted at a mass temperature of 225 °C and, after a coarse degassing, with the addition of water as entraining agent, degassed finally, 0.1 wt% of tetrakis-(methylene-(3,5-di-t-butylhydroxyhydrocinnamate)-methane and 0.1 wt% of tris-(2,4-di-t-butylphenyl)-phosphite is added to the melt. After distribution of the stabilizers the melt is discharged and granulated.

The resulting modified propylene copolymer **A** shows strain hardening behavior characterized by the Rheotens values of $F_{max}$ = 28.2 cN and $v_{max}$ = 192 mm/s measured at failure of the strand and a melt index of 2.55 g/10 min at 230 °C/2.16 kg.

2.2 Preparation of the Polyolefin Mixture

A mixture of
50 wt% of the modified propylene copolymer **A** having strain hardening behavior characterized by the Rheotens values of $F_{max}$ = 28.2 cN and $v_{max}$ = 192 mm/s measured at failure of the strand and a melt index of 2.55 g/10 min at 230 °C/2.16 kg,
48 wt% of an ethylene-methylmethacrylate-vinyltrimethoxysilane terpolymer **B** having a content of methylmethacrylate of 31 wt%, a content of vinyltrimethoxysilane of 1.0 wt% and contains 0.1 wt% of calcium stearate, 0.1 wt% of tetrakis-(methylene-3,5-di-t-butylhydroxyhydrocinnamate)-methane and 0.1 wt% of tris-(2,4-di-t-butylphenyl)-phosphite as auxiliary materials and has a melt index of 10 g/10 min at 190 °C/2.16 kg,
2.0 wt% of a master batch containing 4 wt% of dibutyl tin diacetate as silanole condensation catalyst,
is melted in a PRISM TSE24HC twin screw extruder, UD=30 with a temperature profile of 100/145/180/205/220/210/200/180 °C, homogenized, discharged and granulated.

2.3 Manufacture of the foamed polyolefin sheet

A dry blend mixture of the stabilized polyolefin compound of the modified propylene copolymer **A** and the ethylene-methylmethacrylate-vinyltrimethoxysilane terpolymer **B** as described in 2.2 with 0.75 wt%, based on the polyolefin mixture, of a mixture of blowing agents based on bicarbonate and citric acid, is supplied by means of a metering system to the feeding funnel of single screw extruder PM 30 L/D = 28 at 80 rpm having a screw with increasing diameter used for slow compression build-up without mixing elements, a flat die (coathanger die), a chill roll (80 °C) take off and a temperature profile of 200/220/240/240/220/170/170 °C. Initially, the mixture is melted and homogenized, subsequently the split off blowing gas is distributed homogeneously and the melt is foamed after leaving the flat die.

After a conditioning time of 7 days following properties of the foamed polyolefin sheet were measured :

| | |
|---|---|
| Density | 0.57 g/cm$^3$ |
| Tensile modulus | 346 MPa |
| Penetration energy at 23 °C | 0.79 J/mm |
| Gel content | 33.8 wt% |

**Example 3**

3.1 Synthesis of the Modified Propylene Polymer **A**

A powdery polypropylene homopolymer, with a melt index of 3.6 g/10 min at 230 °C/2.16 kg and an average particle size of 0.42 mm, is metered continuously into a continuous mixerat room temperature. Furthermore, 0.62 wt% of dicetyl peroxydicarbonate based on the propylene homopolymer, is metered continuously into the mixer. After a residence time of 10 minutes the polypropylene-peroxide mixture is transferred to a twin screw extruder, melted at a mass temperature of 230 °C and, after a coarse degassing, subjected to a fine degassing with addition of water as an entraining agent, discharged and granulated.

The resulting, modified propylene polymer **A** shows strain hardening behavior characterized by the Rheotens values of $F_{max}$ = 31.7 cN and $v_{max}$ = 187 mm/s measured at failure of the strand and a melt index of 0.73 g/10 min at 230 °C/2.16 kg.

3.2 Preparation of the precrosslinked olefin polymer **B**

In a stirred stainless steel vessel, which can be closed off and has a heating mantle and facilities for flushing with nitrogen, 100 parts by weight of polyethylene HD homopolymer powder, having an average particle diameter of 0.25 mm and a melt index of 1.2 g/10 minutes (at 190 °C and 5 kg, corresponding to DIN 53735) were placed under a blanket of nitrogen. While stirring the mixture, 1.5 parts by weight of vinyltriethoxysilane and 1.0 parts by weight of t-butylperoxy 2-ethylhexanoate is added to the powder bed and the mixture, after mixing for 50 minutes at 40 °C, is heated with stirring to the reaction temperature of 90 °C, maintained at this temperature with stirring for 6 hours and then cooled to room temperature. Thereupon, the stabilizers tetrakis-(methylene-3,5-di-t-butyl-hydroxyhydrocinnamate) methane (0.2 parts by weight), Ionol (0.4 parts by weight) and tris-(2,4-di-t-butylphenyl)-phosphite (0.2 parts by weight) as well as dibutyl tin dilaurate (0.01 parts by weight) as silanole condensation catalyst were added in the mixer. The powdery mixture was melted in a PRISM TSE24HC twin screw extruder, L/D=30 with a temperature profile of 100/145/185/210/220/200/190/185 °C homogenized, discharged, granulated. The silane-grafted ethylene polymer has a melt index of 0.65 g/10 min at 190 °C/5 kg and a grafted silane content determined by IR spectroscopy of 1,1 wt%. The precrosslinking was carried out by conditioning in moist atmosphere for 2 days. The resulting precrosslinked silane-grafted polyethylene has a gel content of 5.5 wt% and a melt index of 0.01 g/10 min at 190 °C/5 kg.

3.3 Preparation of the Polyolefin Mixture

A mixture of

40 wt% of the modified propylene polymer **A** having strain hardening behavior characterized by the Rheotens values of $F_{max}$ = 31.7 cN and $v_{max}$ = 187 mm/s measured at failure of the strand and a melt index of 0.73 g/10 min at 230 °C/ 2.16 kg,

20 wt% of a propylene block copolymer having an ethylene content of 8.3 wt%, a stereospecifity index of 97.4 % and a melt index of 0.30 g/10 min at 230 °C/2.16 kg,

23 wt% of a precrosslinked silane-grafted polyethylene having a gel content of 3.5 wt% and a melt index of 0.01 g/10 min at 190 °C/5 kg,

15 wt% of a heterophasic random propylene-ethylene copolymer with a melt index of 25.5 g/10 min at 230 °C/2.16 kg and an ethylene content of 5.5 wt%,

2.0 wt% of a master batch containing 4 wt% of dibutyl tin diacetate as silanole condensation catalyst,

is melted in a PRISM TSE24HC twin screw extruder, L/D = 28 with a temperature profile of 100/145/185/210/220/200/190/185 °C, homogenized, discharged and granulated.

3.4 Manufacture of the foamed polyolefin sheet

A dry blend of the stabilized polyolefin mixture of the modified propylene polymer, the unmodified propylene block copolymer, the precrosslinked silane-grafted polyethylene and the unmodified heterophasic random propylene-ethylene copolymer as described in 3.3 with 0.75 wt%, based on the polyolefin mixture, of a mixture of blowing agents based on bicarbonate and citric acid, is supplied by means of a metering system to the feeding funnel of a single screw extruder PM 30 L/D = 28 at 50 rpm having a screw with increasing diameter used for slow compression build-up without mixing elements, a flat die (coathanger die), a chill roll (80°C) take off and a temperature profile of 200/220/240/240/220/170/170 °C. Initially, the mixture is melted and homogenized, subsequently the split off blowing gas is distributed homogeneously and the melt is foamed after leaving the flat die.

After a conditioning time of 7 days the following properties of the foamed polyolefin sheet were measured:

| | |
|---|---|
| Density | 0.49 g/cm$^3$ |
| Tensile modulus | 550 MPa |
| Penetration energy at 23 °C | 0.41 J/mm |
| Gel content | 18.2 wt% |

**Claims**

1. Use of a polyolefin mixture comprising
   10 to 95 wt% of propylene polymers **A** and
   90 to 5 wt% of olefin polymers **B** where

   • the propylene polymers **A** comprise modified propylene polymers with melt indices of 0.05 to 10 g/10 min at 230 °C/2.16 kg, which modified propylene polymers have strain hardening behavior, whereby the modified propylene polymers are present in the propylene polymers **A** up to 100 wt%, preferably from 20 to 100 wt% and most preferably from 50 to 100 wt% in admixture with unmodified propylene polymers with melt indices of 0.1 to 20 g/10 min at 230 °C/2.16 kg, and
   • the olefin polymers **B** comprise silane precrosslinked and/or crosslinkable polymers which are selected from any one or mixtures of

a) polymers which are grafted with ethylenically unsaturated hydrolyzable silane monomers, which polymers are selected from any one or mixtures of

a1) ethylene homopolymers,
copolymers of ethylene and $\alpha$-olefins with 3 to 18 carbon atoms,
copolymers of ethylene and vinyl acetate, $C_1$-$C_{16}$ acrylic acid esters, $C_1$-$C_{16}$ methacrylic acid esters, acrylic acid and/or methacrylic acid,
a2) propylene homopolymers,
copolymers of propylene and ethylene or $\alpha$-olefins with 4 to 18 carbon atoms,
heterophasic propylene polymers and
elastomeric propylene polymers

and
b) polymers which are selected from any one or mixtures of - optionally elastomeric - copolymers of ethylenically unsaturated hydrolyzable silane monomers and

b1) ethylene,
ethylene and vinyl acetate, $C_1$-$C_{16}$ acrylic acid esters, $C_1$-$C_{16}$ methacrylic acid esters, acrylic acid or methacrylic acid,
b2) propylene,
propylene and vinyl acetate, $C_1$-$C_{16}$ acrylic acid esters, $C_1$-$C_{16}$ methacrylic acid esters, acrylic acid or methacrylic acid,

where the olefin polymers **B** comprise 0.1 to 10 wt% of chemically bound silane monomers and where the olefin polymers **B** have a gel content of 10 to 80 wt%, preferably of 35 to 70 wt% and where
the silane precrosslinked and/or crosslinkable polymers are present in the olefin polymers **B** up to 100 wt% and preferably from 50 to 100 wt% in admixture with
unmodified ethylene polymers and/or ethylene-$C_3$-$C_8$-$\alpha$-olefin copolymers with melt indices of 0.1 to 20g/ 10 min at 190 °C/2.16 kg, and/or unmodified propylene homopolymers and/or copolymers of propylene and ethylene or $\alpha$-olefins with 4 to 18 carbon atoms, heterophasic propylene polymers and/or elastomeric propylene polymers with melt indices of 0.1 to 20 g/10 min at 230 °C/2.16 kg
for the production of partly crosslinked foamed polyolefin sheets which have a combination of the following properties:

a gel content from 5 to 60 wt%, preferably from 10 to 40 wt%
a density from 50 to 750 kg/m$^3$, preferably from 400 to 600 kg/m$^3$
a tensile modulus from 50 to 1100 MPa, preferably from 300 to 700 MPa
and an Impact total penetration energy from 0.05 to 1.5 J/mm, preferably from 0.3 to 0.9 J/mm.

2. Use according to claim 1, **characterized in that** the modified propylene polymers **A** are prepared by

a) mixing a particulate unmodified propylene polymer, which comprises

a1) propylene homopolymers, especially propylene homopolymers with a weight average molecular weight $M_w$ of 500,000 to 1,500,000 g/mol, and/or

a2) copolymers of propylene and ethylene and/or $\alpha$-olefins with 4 to 18 carbon atoms, or of mixtures of such copolymers,
with from 0.05 to 3 wt%, based on the polyolefin composition used, of acyl peroxides, alkyl peroxides, hydroperoxides, peresters and/or peroxycarbonates as free-radical generators capable of thermal decomposition, if desired diluted with inert solvents, with heating to 30-100 °C, preferably to 60-90 °C,

b) sorption of bifunctional unsaturated monomers by the particulate propylene polymer at a temperature T(°C) of from 20 to 120 °C, preferably of from 60 to 100 °C, where the amount of the absorbed bifunctional unsaturated monomers is from 0.01 to 10 wt%, preferably from 0.05 to 2 wt%, based on the propylene polymer used, and then

c) heating and melting the particulate polyolefin composition in an atmosphere comprising inert gas and/or the volatile bifunctional monomers, from sorption temperature to 210 °C, whereupon the free-radical generators capable of thermal decomposition are decomposed and then

d) heating the melt up to 280 °C in order to remove unreacted monomers and decomposition products,

e) agglomerating the melt in a manner known per se.

3. Use according to claim 1 or 2, **characterized in that** the unmodified propylene polymers are selected from any one or mixtures of

a) conventional polypropylene polymers, preferably propylene homopolymers and/or copolymers of propylene, ethylene and/or $\alpha$-olefins with 4 to 18 carbon atoms, obtainable by using Ziegler-Natta catalysts or metallocene catalysts, having a propylene content of 80.0 to 99.9 wt%, in the form of random copolymers, block copolymers and/or random block copolymers with melt indices of 0.1 to 40 g/10 min at 230 °C/2.16 kg and preferably 1 to 8 g/10 min at 230 °C/2.16 kg,
b) a polyolefin mixture with an Mw/Mn ratio of 2 to 6 and a melt index of 1 to 40 g/10 min at 230 °C/2.16 kg, which comprises

b1) 60 to 98 wt% of a crystalline copolymer of 85 to 99.5 wt% of propylene and 15 to 0.5 wt% of ethylene and/or an $\alpha$-olefin of the general formula $CH_2=CHR$, in which R is a linear or branched alkyl group with 2 to 8 carbon atoms, and
b2) 2 to 40 wt% of an elastic copolymer of 20 to 70 wt% of ethylene and 80 to 30 wt% of propylene and/or an $\alpha$-olefin of the general formula $CH_2=CHR$, in which R is a linear or branched alkyl group with 2 to 8 carbon atoms,

c) essentially amorphous, non isotactic polymers of propylene with a melt index of 0.1 to 100 g/10 min at 230 °C/2.16 kg, the essentially amorphous polymers of propylene comprising homopolymers of propylene and/or copolymers of propylene comprising at least 85 wt% of propylene and not more than 15 wt% percent of one or more $\alpha$-olefins of the general formula $CH_2=CHR$, in which R is a linear or branched alkyl group with 2 to 8 carbon atoms.

4. Use according to any one of claims 1 to 3, **characterized in that** the unmodified propylene polymers are obtained by polymerization with a Ziegler-Natta catalyst system comprising titanium-containing solid components, an organo-aluminum compound as cocatalyst and an external donor according to the formula

$$R_xR'_ySi(R''O)_{4-x-y}$$

wherein R, R' and R" are identical or different and are linear or branched or cyclic aliphatic or aromatic hydrocarbon residues, and y and x independently from each other are 0 or 1, provided that x + y are 1 or 2, where dicyclopentyldimethoxysilane is preferred as external donor.

5. Use according to any one of claims 1 to 4, **characterized in that** the silane monomers of the olefin polymers **B** have the general formula $XY_{3-n}SiR_n$, in which X is an ethylenically unsaturated group which can be grafted or copolymerized, preferably vinyl, allyl, acryloxypropyl or methacryloxypropyl, Y is an alkyl or aryl group, preferably methyl or phenyl, and R is a $C_1$-$C_8$ alkoxy, and/or carboxy group and/or halogen, preferably methoxy, ethoxy, acetoxy, chlorine, bromine or iodine, and n represents the numbers 1, 2 or 3.

6. Use according to any one of claims 1 to 5, **characterized in that** the silane precrosslinked and/or crosslinkable olefin polymer is a crosslinked ethylene-methylmethacrylate-vinyltrimethoxysilane terpolymer having a content of methylmethacrylate of from 25 to 35 wt% and a content of vinyltrimethoxysilane of from 0.1 to 2 wt%.

7. Use according to any one of claims 1 to 6, **characterized in that** the foamed polyolefin sheets are obtained by adding 0.01 to 1 wt%, based on the polyolefin mixture, of silanole condensation catalysts and 0.5 to 12 wt%, based on the polyolefin mixture, of blowing agents to the polyolefin mixture,
melting the polyolefin mixture,
extruding the polyolefin mixture into a zone of reduced pressure and

conditioning the polyolefin sheets in a moist atmosphere under crosslinking, whereby the olefin polymers **B** comprise silane crosslinkable polymers.

8. Use according to any one of claims 1 to 6, **characterized in that** the foamed polyolefin sheets are obtained by adding 0.01 to 1 wt%, based on the polyolefin mixture, of silanole condensation catalysts and 0.5 to 12 wt%, based on the polyolefin mixture, of blowing agents to the polyolefin mixture,
melting the polyolefin mixture,
extruding the polyolefin mixture into a zone of reduced pressure and
conditioning the polyolefin sheets in a moist atmosphere under crosslinking, whereby the olefin polymers **B** comprise silane precrosslinked polymers which have a gel content of 0.1 to 5 wt%.

9. The use of the foamed polyolefin sheets with improved property spectrum according to any one of claims 1 to 8 in the packaging sector, particularly of packaging, which can be used as reusable, and transporting packagings, packaging corners and equipment hoods.

10. The use of the foamed polyolefin sheets with improved property spectrum according to any one of claims 1 to 8 in the motor vehicle sector, particularly for interior parts of motor vehicles, such as instrument panels, sunshades, arm rests, air ducts and door linings.

Fig. 1:

Fig. 2:

**European Patent Office**

## EUROPEAN SEARCH REPORT

Application Number

EP 01 13 0757

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 6 077 907 A (GAHLEITNER MARKUS ET AL) 20 June 2000 (2000-06-20)<br>* abstract; claims 1-35 *<br>* column 1, line 20-29 *<br>* column 2, line 60-67 *<br>* column 3, line 1-67 *<br>* column 4, line 50 *<br>* column 5, line 5-65 *<br>* column 6, line 1-15 *<br>* column 7, line 3-8 *<br>* column 9, line 30-35,45-50 *<br>--- | 1-10 | C08L23/10<br>C08L23/12<br>C08L51/06<br>C08J9/00 |
| Y | EP 0 646 622 A (SEIKISUI CHEMICAL CO LTD) 5 April 1995 (1995-04-05)<br>* abstract; claims 1-93 *<br>* page 3, line 30-58 *<br>* page 6, line 50-59 *<br>* page 7, line 10 *<br>* page 8, line 15-55 *<br>* page 10, line 45 *<br>* page 11, line 25 *<br>--- | 1-4,7-10 | |
| Y | US 4 413 066 A (ISAKA TSUTOMU ET AL) 1 November 1983 (1983-11-01)<br>* abstract; claims 1-14 *<br>* column 12; example 13 *<br>--- | 5,6 | TECHNICAL FIELDS SEARCHED (Int.Cl.7)<br><br>C08L<br>C08J |
| A | US 6 251 995 B1 (KIRCHBERGER MANFRED ET AL) 26 June 2001 (2001-06-26)<br>* abstract; claims 1-14 *<br>--- | 1-10 | |
| A | EP 0 972 791 A (FRAUNHOFER GES FORSCHUNG) 19 January 2000 (2000-01-19)<br>* abstract; claims 1,2 *<br>--- | 1-10 | |
| A | EP 0 412 518 A (UNION CARBIDE CHEM PLASTIC) 13 February 1991 (1991-02-13)<br>* abstract; claims 1-18 *<br>------ | 1-10 | |

The present search report has been drawn up for all claims

| Place of search | Date of completion of the search | Examiner |
|---|---|---|
| THE HAGUE | 11 March 2002 | Bergmans, K |

EPO FORM 1503 03 82 (P04C01)

**ANNEX TO THE EUROPEAN SEARCH REPORT
ON EUROPEAN PATENT APPLICATION NO.**　　EP 01 13 0757

This annex lists the patent family members relating to the patent documents cited in the above–mentioned European search report.
The members are as contained in the European Patent Office EDP file on
The European Patent Office is in no way liable for these particulars which are merely given for the purpose of information.

11-03-2002

| Patent document cited in search report | | Publication date | Patent family member(s) | | Publication date |
|---|---|---|---|---|---|
| US 6077907 | A | 20-06-2000 | DE | 19729231 A1 | 14-01-1999 |
| | | | DE | 19806105 A1 | 19-08-1999 |
| | | | CZ | 9802157 A3 | 15-12-1999 |
| | | | EP | 0890612 A2 | 13-01-1999 |
| EP 0646622 | A | 05-04-1995 | AU | 692167 B2 | 04-06-1998 |
| | | | AU | 7412194 A | 13-04-1995 |
| | | | CA | 2132598 A1 | 22-03-1995 |
| | | | CN | 1112582 A | 29-11-1995 |
| | | | DE | 69426405 D1 | 18-01-2001 |
| | | | DE | 69426405 T2 | 19-07-2001 |
| | | | EP | 0646622 A2 | 05-04-1995 |
| | | | JP | 3169513 B2 | 28-05-2001 |
| | | | JP | 8073640 A | 19-03-1996 |
| | | | US | 5552448 A | 03-09-1996 |
| | | | US | 5646194 A | 08-07-1997 |
| | | | US | 5738922 A | 14-04-1998 |
| | | | US | 5594038 A | 14-01-1997 |
| | | | JP | 8112873 A | 07-05-1996 |
| US 4413066 | A | 01-11-1983 | JP | 1491855 C | 07-04-1989 |
| | | | JP | 55009611 A | 23-01-1980 |
| | | | JP | 62023777 B | 25-05-1987 |
| | | | JP | 1491856 C | 07-04-1989 |
| | | | JP | 55009612 A | 23-01-1980 |
| | | | JP | 62023778 B | 25-05-1987 |
| | | | DE | 2926830 A1 | 17-01-1980 |
| | | | FR | 2430432 A1 | 01-02-1980 |
| | | | GB | 2028831 A ,B | 12-03-1980 |
| US 6251995 | B1 | 26-06-2001 | DE | 19815046 A1 | 14-10-1999 |
| | | | EP | 0947551 A1 | 06-10-1999 |
| EP 0972791 | A | 19-01-2000 | DE | 19831517 C1 | 13-07-2000 |
| | | | EP | 0972791 A2 | 19-01-2000 |
| EP 0412518 | A | 13-02-1991 | BR | 9003862 A | 03-09-1991 |
| | | | CA | 2022774 A1 | 09-02-1991 |
| | | | EP | 0412518 A2 | 13-02-1991 |
| | | | JP | 3149242 A | 25-06-1991 |

EPO FORM P0459

For more details about this annex : see Official Journal of the European Patent Office, No. 12/82